(19) Europäisches Patentamt
European Patent Office
Office européen des brevets

(11) **EP 3 165 754 A1**

(12) **EUROPEAN PATENT APPLICATION**

(43) Date of publication:
**10.05.2017 Bulletin 2017/19**

(51) Int Cl.:
*F02K 3/06* (2006.01)          *F02K 3/072* (2006.01)
*F02C 3/107* (2006.01)          *F02C 7/06* (2006.01)

(21) Application number: **16196969.6**

(22) Date of filing: **02.11.2016**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **03.11.2015 US 201514930819**

(71) Applicant: **United Technologies Corporation Farmington, CT 06032 (US)**

(72) Inventors:
• **Schwarz, Frederick M.**
  **Glastonbury, CT 06033 (US)**
• **Suciu, Gabriel L.**
  **Glastonbury, CT 06033 (US)**
• **Kupratis, Daniel B.**
  **Wallingford, CT 06492 (US)**
• **Ackermann, William K.**
  **East Hartford, CT 06118-1905 (US)**

(74) Representative: **Hull, James Edward**
  **Dehns**
  **St. Bride's House**
  **10 Salisbury Square**
  **London**
  **EC4Y 8JD (GB)**

(54) **GAS TURBINE ENGINE WITH HIGH SPEED LOW PRESSURE TURBINE SECTION AND BEARING SUPPORT FEATURES**

(57)    A turbine section (28) of a gas turbine engine (20) includes a fan drive turbine section (46) and a second turbine section (54). The fan drive turbine section (46) has a first exit area (401) at a first exit point and is configured to rotate at a first speed. The second turbine section (54) has a second exit area (400) at a second exit point and is configured to rotate at a second speed, which is faster than the first speed.

FIG.3

EP 3 165 754 A1

**Description**

**BACKGROUND**

This application relates to a gas turbine engine wherein the low pressure turbine section is rotating at a higher speed and centrifugal pull stress relative to the high pressure turbine section speed and centrifugal pull stress than prior art engines.

Gas turbine engines are known, and typically include a fan delivering air into a low pressure compressor section. The air is compressed in the low pressure compressor section, and passed into a high pressure compressor section. From the high pressure compressor section the air is introduced into a combustion section where it is mixed with fuel and ignited. Products of this combustion pass downstream over a high pressure turbine section, and then a low pressure turbine section.

Traditionally, on many prior art engines the low pressure turbine section has driven both the low pressure compressor section and a fan directly. As fuel consumption improves with larger fan diameters relative to core diameters it has been the trend in the industry to increase fan diameters. However, as the fan diameter is increased, high fan blade tip speeds may result in a decrease in efficiency due to compressibility effects. Accordingly, the fan speed, and thus the speed of the low pressure compressor section and low pressure turbine section (both of which historically have been coupled to the fan via the low pressure spool), have been a design constraint. More recently, gear reductions have been proposed between the low pressure spool (low pressure compressor section and low pressure turbine section) and the fan.

**SUMMARY**

A turbine section of a gas turbine engine according to an example of the present disclosure includes a fan drive turbine section and a second turbine section. The fan drive turbine section has a first exit area at a first exit point and is configured to rotate at a first speed. The second turbine section has a second exit area at a second exit point and is configured to rotate at a second speed, which is faster than the first speed. A first performance quantity is defined as the product of the first speed squared and the first area. A second performance quantity is defined as the product of the second speed squared and the second area. A ratio of the first performance quantity to the second performance quantity is between about 0.5 and about 1.5. The second turbine section is configured to drive a first shaft supported on a bearing, with the bearing being situated between the first exit area and the second exit area.

In a further embodiment of any of the foregoing embodiments, the ratio is above or equal to about 0.8.

In a further embodiment of any of the foregoing embodiments, the fan drive turbine section has between three and six stages. The second turbine section has two or fewer stages. A pressure ratio across the fan drive turbine section is greater than about 5:1.

In a further embodiment of any of the foregoing embodiments, the fan drive and second turbine sections are configured to rotate in opposed directions.

In a further embodiment of any of the foregoing embodiments, each of the fan drive turbine section and the second turbine section is configured to rotate in a first direction.

In a further embodiment of any of the foregoing embodiments, the bearing is mounted on an outer periphery of a second shaft driven by the fan drive turbine section.

In a further embodiment of any of the foregoing embodiments, the first shaft is supported by a second bearing on its outer periphery, with the second bearing mounted to a static structure.

In a further embodiment of any of the foregoing embodiments, there is no bearing support structure positioned intermediate the fan drive and second turbine sections.

A gas turbine engine according to an example of the present disclosure includes a compressor section including a first compressor section and a second compressor section, a gear arrangement configured to drive a fan, and a turbine section including a fan drive turbine section and a second turbine section. The fan drive turbine is configured to drive the gear arrangement. The fan drive turbine section has a first exit area at a first exit point and is configured to rotate at a first speed. The second turbine section has a second exit area at a second exit point and is configured to rotate at a second speed, which is faster than the first speed. A first performance quantity is defined as the product of the first speed squared and the first area. A second performance quantity is defined as the product of the second speed squared and the second area. A ratio of the first performance quantity to the second performance quantity is less than or equal to about 1.5. The second turbine section is configured to drive a first shaft mounted on a bearing, with the bearing situated between the first exit area and the second exit area.

In a further embodiment of any of the foregoing embodiments, the ratio is above or equal to about 0.5, and the fan defines a pressure ratio less than about 1.45.

In a further embodiment of any of the foregoing embodiments, the fan drive turbine section and the first compressor section are configured to rotate in a first direction. The second turbine section and the second compressor section are configured to rotate in a second opposed direction.

In a further embodiment of any of the foregoing embodiments, the fan rotates in the second opposed direction.

In a further embodiment of any of the foregoing embodiments, the first compressor section includes three stages, and the second compressor section includes eight stages.

In a further embodiment of any of the foregoing embodiments, each of the fan drive turbine section and the second turbine sections is configured to rotate in a first direction.

In a further embodiment of any of the foregoing embodiments, the bearing is mounted on an outer periphery of a second shaft which is driven by the fan drive turbine section.

In a further embodiment of any of the foregoing embodiments, the second shaft is supported on a second bearing on its outer periphery, with the second bearing being mounted to a static structure. A third bearing supports the second compressor section on an outer periphery of the first shaft. A fourth bearing is positioned adjacent the first compressor section, and supports an outer periphery of the second shaft.

A method of designing a gas turbine engine according to an example of the present disclosure includes providing a fan section including a fan, providing a compressor section, including both a first compressor and a second compressor, and providing a turbine section, including both a fan drive turbine section and a second turbine section. The second turbine section is configured to drive a first shaft. The first shaft is mounted on a bearing driving the compressor section and the fan section via the turbine section. The fan drive turbine section has a first exit area at a first exit point and is configured to rotate at a first speed. The second turbine section has a second exit area at a second exit point and is configured to rotate at a second speed, which is faster than the first speed. A first performance quantity is defined as the product of the first speed squared and the first area at a predetermined design target. A second performance quantity is defined as the product of the second speed squared and the second area at the predetermined design target. A ratio of the first performance quantity to the second performance quantity is between about 0.5 and about 1.5. The bearing is situated between the first exit area and the second exit area.

In a further embodiment of any of the foregoing embodiments, the predetermined design target corresponds to a takeoff condition.

In a further embodiment of any of the foregoing embodiments, an overall pressure ratio is provided by the combination of a pressure ratio across the first compressor and a pressure ratio across the second compressor at the predetermined design target, and the overall pressure ratio is greater than or equal to about 35.

In a further embodiment of any of the foregoing embodiments, the first compressor section includes fewer stages than the second compressor section. The fan drive turbine section includes between three and six stages, and the second turbine section includes two or fewer stages.

These and other features of this disclosure will be better understood upon reading the following specification and drawings, the following of which is a brief description.

## BRIEF DESCRIPTION OF THE DRAWINGS

Figure 1 shows a gas turbine engine.

Figure 2 schematically shows the arrangement of the low and high spool, along with the fan drive.

Figure 3 shows a schematic view of a mount arrangement for an engine such as shown in Figures 1 and 2.

## DETAILED DESCRIPTION

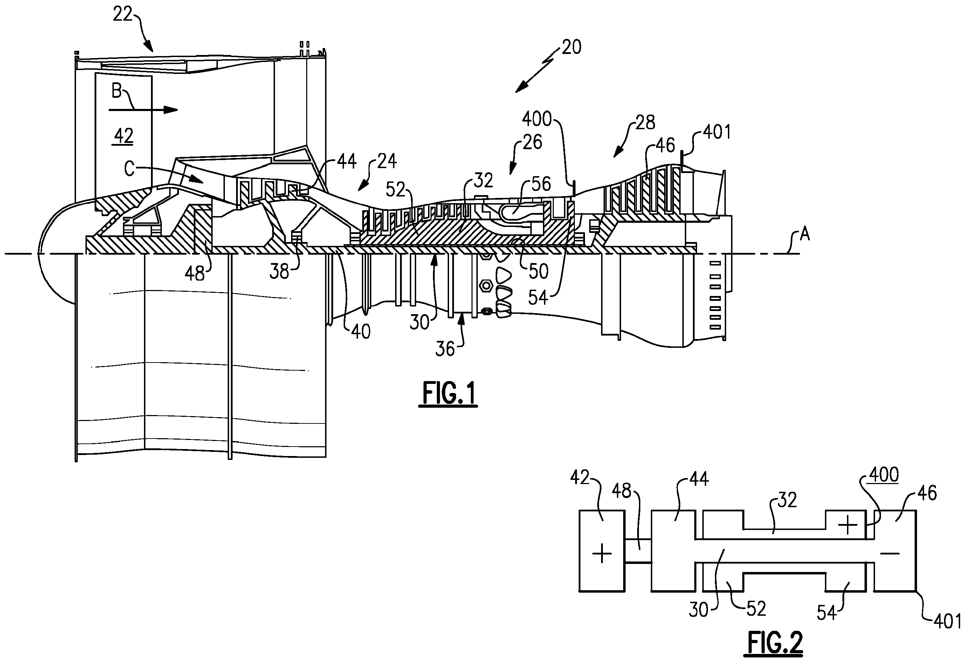

Figure 1 schematically illustrates a gas turbine engine 20. The gas turbine engine 20 is disclosed herein as a two-turbine turbofan that generally incorporates a fan section 22, a compressor section 24, a combustor section 26 and a turbine section 28. Alternative engines might include an augmentor section (not shown) among other systems or features. The fan section 22 drives air along a bypass flow path B while the compressor section 24 drives air along a core flow path C for compression and communication into the combustor section 26 then expansion through the turbine section 28. Although depicted as a turbofan gas turbine engine in the disclosed non-limiting embodiment, it should be understood that the concepts described herein are not limited to use with turbofans as the teachings may be applied to other types of turbine engines including three-turbine architectures.

The engine 20 generally includes a low speed spool 30 and a high speed spool 32 mounted for rotation about an engine central longitudinal axis A relative to an engine static structure 36 via several bearing systems 38. It should be understood that various bearing systems 38 at various locations may alternatively or additionally be provided.

The low speed spool 30 generally includes an innermost shaft 40 that interconnects a fan 42, a low pressure (or first) compressor section 44 and a low pressure (or first) turbine section 46. Note turbine section 46 will also be known as a fan drive turbine section. The inner shaft 40 is connected to the fan 42 through a geared architecture 48 to drive the fan 42 at a lower speed than the low speed fan drive turbine 46. The high speed spool 32 includes a more outer shaft 50 that interconnects a high pressure (or second) compressor section 52 and high pressure (or second) turbine section 54. A combustor 56 is arranged between the high pressure compressor section 52 and the high pressure turbine section 54. As used herein, the high pressure turbine section experiences higher pressures than the low pressure turbine section. A low pressure turbine section is a section that powers a fan 42.

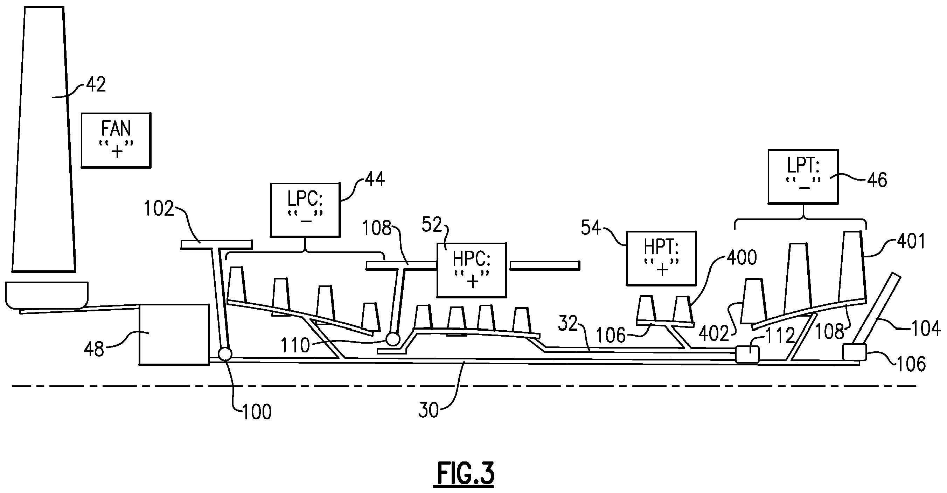

In the illustrated example, the low pressure compressor 44 includes fewer stages than the high pressure compressor 52, and more narrowly, the low pressure compressor 44 includes three stages and the high (or second) pressure compressor 52 includes eight stages (Figure 1). In another example, the low pressure compressor 44 includes four stages and the high (or second) pressure compressor 52 includes four stages (Figure 3). In the illustrated example, the high pressure turbine 54 includes fewer stages than the low pressure turbine 46, and more narrowly, the low pressure turbine 46 includes five stages, and the high pressure turbine 54 includes two stages. In one example, the low pressure turbine 46 includes three stages, and the high pressure turbine 54 includes two stages (Figure 3).

The inner shaft 40 and the outer shaft 50 are concentric and rotate via bearing systems 38 about the engine central longitudinal axis A which is collinear with their longitudinal axis. The high and low spools can be either co-rotating or counterrotating.

The core airflow C is compressed by the low pressure compressor section 44 then the high pressure compressor section 52, mixed and burned with fuel in the combustor 56, then expanded over the high pressure turbine section 54 and low pressure turbine section 46.

The engine 20 in one example is a high-bypass geared aircraft engine. The bypass ratio is the amount of air delivered into bypass path B divided by the amount of air into core path C. In a further example, the engine 20 bypass ratio is greater than about six, with an example embodiment being greater than ten, the geared architecture 48 is an epicyclic gear train, such as a planetary gear system or other gear system, with a gear reduction ratio of greater than about 2.3 and the low pressure turbine section 46 has a pressure ratio that is greater than about five. In one disclosed embodiment, the engine 20 bypass ratio is greater than about ten, the fan diameter is significantly larger than that of the low pressure compressor section 44, and the low pressure turbine section 46 has a pressure ratio that is greater than about 5:1. In some embodiments, the high pressure turbine section may have two or fewer stages. In contrast, the low pressure turbine section 46, in some embodiments, has between 3 and 6 stages. Further the low pressure turbine section 46 pressure ratio is total pressure measured prior to inlet of low pressure turbine section 46 as related to the total pressure at the outlet of the low pressure turbine section 46 prior to an exhaust nozzle. The geared architecture 48 may be an epicycle gear train, such as a planetary gear system or other gear system, with a gear reduction ratio of greater than about 2.5:1. It should be understood, however, that the above parameters are only exemplary of one embodiment of a geared architecture engine

A significant amount of thrust is provided by the bypass flow B due to the high bypass ratio. The fan section 22 of the engine 20 is designed for a particular flight condition -- typically cruise at about 0.8 Mach and about 35,000 feet (10,668 m). The flight condition of 0.8 Mach and 35,000 ft (10,668 m), with the engine at its best fuel consumption - also known as "bucket cruise Thrust Specific Fuel Consumption ("TSFC"). TSFC is the industry standard parameter of the rate of lbm of fuel being burned per hour divided by lbf of thrust the engine produces at that flight condition. "Low fan pressure ratio" is the ratio of total pressure across the fan blade alone, before the fan exit guide vanes. The low fan pressure ratio as disclosed herein according to one non-limiting embodiment is less than about 1.45. "Low corrected fan tip speed" is the actual fan tip speed in ft/sec divided by an industry standard temperature correction of $[(Ram Air Temperature deg R / 518.7)^{0.5}]$ (where deg R = K x 9/5). The "Low corrected fan tip speed" as disclosed herein according to one non-limiting embodiment is less than about 1150 ft / second (350.5 m/s). Further, the fan 42 may have 26 or fewer blades.

An exit area 400 is shown, in Figure 1 and Figure 2, at the exit location for the high pressure turbine section 54 is the annular area of the last blade of turbine section 54. An exit area for the low pressure turbine section is defined at exit 401 for the low pressure turbine section is the annular area defined by the last blade of that turbine section 46. As shown in Figure 2, the turbine engine 20 may be counterrotating. This means that the low pressure turbine section 46 and low pressure compressor section 44 rotate in one direction ("-'), while the high pressure spool 32, including high pressure turbine section 54 and high pressure compressor section 52 rotate in an opposed direction ("+"). The gear reduction 48, which may be, for example, an epicyclic transmission (e.g., with a sun, ring, and star gears), is selected such that the fan 42 rotates in the same direction ("+") as the high spool 32. With this arrangement, and with the other structure as set forth above, including the various quantities and operational ranges, a very high speed can be provided to the low pressure spool. Low pressure turbine section and high pressure turbine section operation are often evaluated looking at a performance quantity which is the exit area for the turbine section multiplied by its respective speed squared. This performance quantity ("PQ") is defined as:

$$\textit{Equation 1:} \quad PQ_{ltp} = (A_{lpt} \times V_{lpt}^2)$$

$$\textit{Equation 2:} \quad PQ_{hpt} = (A_{hpt} \times V_{hpt}^2)$$

where $A_{lpt}$ is the area of the low pressure turbine section at the exit thereof (e.g., at 401), where $V_{lpt}$ is the speed of the low pressure turbine section, where $A_{hpt}$ is the area of the high pressure turbine section at the exit thereof (e.g., at 400), and where $V_{hpt}$ is the speed of the high pressure turbine section.

Thus, a ratio of the performance quantity for the low pressure turbine section compared to the performance quantify for the high pressure turbine section is:

$$\textit{Equation 3:} \quad (A_{lpt} \times V_{lpt}^2)/(A_{hpt} \times V_{hpt}^2) = PQ_{ltp}/ PQ_{hpt}$$

In one turbine embodiment made according to the above design, the areas of the low and high pressure turbine sections are 557.9 in$^2$ (3599 cm$^2$) and 90.67 in$^2$ (585 cm$^2$), respectively. Further, the speeds of the low and high pressure turbine sections are 10179 rpm and 24346 rpm, respectively. Thus, using Equations 1 and 2 above, the performance quantities for the low and high pressure turbine sections are:

$$\textit{Equation 1:} \quad PQ_{ltp} = (A_{lpt} \times V_{lpt}^2) = (557.9 \ in^2)(10179 \ rpm)^2 = 57805157673.9 \ in^2 \ rpm^2 \ (372.9 \times 10^9 \ cm^2 \ rpm^2)$$

$$\textit{Equation 2:} \quad PQ_{hpt} = (A_{hpt} \times V_{hpt}^2) = (90.67 \ in^2)(24346 \ rpm)^2 = 53742622009.72 \ in^2 \ rpm^2 \ (346.7 \times 10^9 \ cm^2 \ rpm^2)$$

and using Equation 3 above, the ratio for the low pressure turbine section to the high pressure turbine section is:

$$\textit{Ratio} = PQ_{ltp}/ PQ_{hpt} = 57805157673.9 \ in^2 \ rpm^2 / 53742622009.72 \ in^2 \ rpm^2 = 1.075$$

In another embodiment, the ratio was about 0.5 and in another embodiment the ratio was about 1.5. With $PQ_{ltp}/ PQ_{hpt}$ ratios in the 0.5 to 1.5 range, a very efficient overall gas turbine engine is achieved. More narrowly, $PQ_{ltp}/ PQ_{hpt}$ ratios of above or equal to about 0.8 are more efficient. Even more narrowly, $PQ_{ltp}/ PQ_{hpt}$ ratios above or equal to 1.0 are even more efficient. As a result of these $PQ_{ltp}/ PQ_{hpt}$ ratios, in particular, the turbine section can be made much smaller than in the prior art, both in diameter and axial length. In addition, the efficiency of the overall engine is greatly increased.

The low pressure compressor section is also improved with this arrangement, and behaves more like a high pressure compressor section than a traditional low pressure compressor section. It is more efficient than the prior art, and can provide more compression in fewer stages. The low pressure compressor section may be made smaller in radius and shorter in length while contributing more toward achieving an overall pressure ratio design target of the engine. In some examples, engine 20 is designed at a predetermined design target defined by performance quantities for the low and high pressure turbine sections 46, 54. In further examples, the predetermined design target is defined by pressure ratios of the low pressure and high pressure compressors 44, 52.

In some examples, the overall pressure ratio corresponding to the predetermined design target is greater than or equal to about 35:1. That is, after accounting for a pressure rise of the fan 42 in front of the low pressure compressor 44, the pressure of the air entering the low (or first) compressor section 44 should be compressed as much or over 35 times by the time it reaches an outlet of the high (or second) compressor section 52. In other examples, an overall pressure ratio corresponding to the predetermined design target is greater than or equal to about 40:1, or greater than or equal to about 50:1. In some examples, the predetermined design target is defined at sea level and at a static, full-rated takeoff power condition. In other examples, the predetermined design target is defined at a cruise condition.

As shown in Figure 3, the engine as shown in Figure 2 may be mounted such that the high pressure turbine 54 is "piggy-back" bearing mounted. As shown, the high spool and shaft 32 includes a bearing 112 which supports the high pressure turbine 54 and the high spool 32 on an outer periphery of the low spool shaft 30. The forward end of the high spool 32 is supported by a bearing 110 at an outer periphery of the shaft 32. The bearing 110 is supported on static structure 108 associated with the overall engine casings arranged to form the core of the engine as is shown in figure 1. In addition, the shaft 30 is supported on a bearing 100 at a forward end. The bearing 100 is supported on static structure 102. A rear end of the shaft 30 is supported on a bearing 106 which is attached to static structure 104.

With this arrangement, there is no bearing support struts or other structure in the path of hot products of combustion passing downstream of the combustion section, and into the high pressure turbine 54, and no bearing compartment support struts in the path of the products of combustion as they flow across to the low pressure turbine 46. Stated otherwise, the bearing 112, and its associated mount, are positioned radially inwardly of the hubs 106 and 108 associated with the turbine sections 54 and 46.

As shown, there is no mid-turbine frame mounted in the area 402 between the turbine sections 54 and 46.

While this invention has been disclosed with reference to one embodiment, it should be understood that certain modifications would come within the scope of this invention. For that reason, the following claims should be studied to determine the true scope and content of this invention.

**Claims**

1. A turbine section (28) of a gas turbine engine (20), comprising:

   a fan drive turbine section (46); and
   a second turbine section (54), wherein said fan drive turbine section (46) has a first exit area (401) at a first exit point and is configured to rotate at a first speed, said second turbine section (54) has a second exit area (400) at a second exit point and is configured to rotate at a second speed which is faster than the first speed, a first performance quantity is defined as the product of the first speed squared and the first area (401), a second performance quantity is defined as the product of the second speed squared and the second area (400), a ratio of the first performance quantity to the second performance quantity is between 0.5 and 1.5, and said second turbine section (54) is configured to drive a first shaft (32) supported on a bearing (112), with said bearing (112) being situated between said first exit area (401) and said second exit area (400).

2. The turbine section (28) as set forth in claim 1, wherein said ratio is above or equal to 0.8.

3. The turbine section (28) as set forth in claim 1 or 2, wherein said fan drive turbine section (46) has between three and six stages, said second turbine section (54) has two or fewer stages, and a pressure ratio across said fan drive turbine section (46) is greater than 5:1.

4. The turbine section (28) as set forth in claim 1, 2 or 3, wherein said bearing (112) is mounted on an outer periphery of a second shaft (30) driven by said fan drive turbine section (46).

5. The turbine section (28) as set forth in any preceding claim, wherein said first shaft (32) is supported by a second bearing (110) on its outer periphery, with said second bearing (110) mounted to a static structure (108).

6. The turbine section (28) as set forth in any preceding claim, wherein there is no bearing support structure positioned intermediate said fan drive and second turbine sections (46, 54).

7. The turbine section (28) as set forth in any preceding claim, wherein said fan drive and second turbine sections (46, 54) are configured to rotate in opposed directions.

8. A gas turbine engine (20), comprising:

   a compressor section (24) including a first compressor section (44) and a second compressor section (52);
   a gear arrangement (48) configured to drive a fan (42); and
   a turbine section (28) including a fan drive turbine section (46) and a second turbine section (54), said fan drive turbine section (46) configured to drive said gear arrangement (48), wherein said fan drive turbine section (46) has a first exit area (401) at a first exit point and is configured to rotate at a first speed, said second turbine section (54) has a second exit area (400) at a second exit point and is configured to rotate at a second speed which is faster than the first speed, a first performance quantity is defined as the product of the first speed squared and the first area (401), a second performance quantity is defined as the product of the second speed squared and the second area (400), a ratio of the first performance quantity to the second performance quantity is less than or equal to 1.5, and said second turbine section (54) is configured to drive a first shaft (32) mounted on a bearing (112), with said bearing (112) situated between said first exit area (401) and said second exit area (400).

9. The turbine section (28) or engine (20) as set forth in any of claims 1 to 6, or 8, wherein each of said fan drive turbine section (46) and said second turbine section (54) is configured to rotate in a first direction.

10. The engine (20) as set forth in claim 8, wherein said fan drive turbine section (46) and said first compressor section (44) are configured to rotate in a first direction, and said second turbine section (54) and said second compressor section (52) are configured to rotate in a second opposed direction, optionally wherein said fan (42) rotates in the second opposed direction.

11. The engine (20) as set forth in claim 8, 9, or 10, wherein said ratio is above or equal to 0.5, and said fan (42) defines a pressure ratio less than 1.45.

12. The engine (20) as set forth in any of claims 8 to 11, wherein said bearing (112) is mounted on an outer periphery of a second shaft (30) which is driven by said fan drive turbine section (46), optionally wherein said second shaft (30) is supported on a second bearing (106) on its outer periphery, with said second bearing (106) being mounted to a static structure (104), a third bearing (110) supports said second compressor section (52) on an outer periphery of said first shaft (32), and a fourth bearing (100) is positioned adjacent said first compressor section (44), and supports an outer periphery of said second shaft (30).

13. The engine (20) as set forth in any of claims 8 to 12, wherein said first compressor section (44) includes three stages, and said second compressor section (52) includes eight stages.

14. A method of designing a gas turbine engine (20), comprising:

providing a fan section (22) including a fan (42);
providing a compressor section (24), including both a first compressor (44) and a second compressor (52);
providing a turbine section (28), including both a fan drive turbine section (46) and a second turbine section (54), wherein said second turbine section (54) is configured to drive a first shaft (32), said first shaft (32) mounted on a bearing (112); and
driving the compressor section (24) and the fan section (22) via the turbine section (28), wherein said fan drive turbine section (46) has a first exit area (401) at a first exit point and is configured to rotate at a first speed, said second turbine section (54) has a second exit area (400) at a second exit point and is configured to rotate at a second speed which is faster than the first speed, a first performance quantity is defined as the product of the first speed squared and the first area (401) at a predetermined design target, a second performance quantity is defined as the product of the second speed squared and the second area (400) at the predetermined design target, a ratio of the first performance quantity to the second performance quantity is between 0.5 and 1.5, and said bearing (112) is situated between said first exit area (401) and said second exit area (400), optionally wherein the predetermined design target corresponds to a takeoff condition.

15. The method as set forth in claim 14, wherein:

an overall pressure ratio is provided by the combination of a pressure ratio across said first compressor (44) and a pressure ratio across said second compressor (52) at the predetermined design target, and the overall pressure ratio is greater than or equal to 35; and/or
said first compressor (44) includes fewer stages than said second compressor (52), said fan drive turbine section (46) includes between three and six stages, and said second turbine section (54) includes two or fewer stages.

FIG.1

FIG.2

FIG.3

Europäisches
Patentamt

European
Patent Office

Office européen
des brevets

# EUROPEAN SEARCH REPORT

Application Number

EP 16 19 6969

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 2 811 120 A1 (UNITED TECHNOLOGIES CORP [US]) 10 December 2014 (2014-12-10)<br><br>* claims 1,2,10 *<br>* figures 1B, 1B *<br>* paragraphs [0033], [0055] *<br>----- | 1-3,5, 7-11, 13-15 | INV.<br>F02K3/06<br>F02K3/072<br>F02C3/107<br>F02C7/06 |
| X | US 2013/192200 A1 (KUPRATIS DANIEL BERNARD [US] ET AL) 1 August 2013 (2013-08-01)<br>* figures 1, 8A *<br>* claims 1,15 *<br>* paragraph [0052] *<br>----- | 1-15 | |
| A | US 2014/157757 A1 (HASEL KARL L [US] ET AL) 12 June 2014 (2014-06-12)<br>* paragraph [0018]; figures *<br>----- | 15 | |
| X | US 2013/192266 A1 (HOUSTON DAVID P [US] ET AL) 1 August 2013 (2013-08-01)<br>* paragraph [0009]; figures *<br>----- | 1-14 | |
| X | US 2013/192201 A1 (KUPRATIS DANIEL BERNARD [US] ET AL) 1 August 2013 (2013-08-01)<br>* paragraphs [0010], [0052]; figure 8A *<br>----- | 1-14 | TECHNICAL FIELDS SEARCHED (IPC)<br><br>F02K<br>F02C |
| X | US 2013/192265 A1 (SCHWARZ FREDERICK M [US] ET AL) 1 August 2013 (2013-08-01)<br>* paragraph [0005]; figures 1, 3 *<br>----- | 1-14 | |
| X | WO 2013/116257 A1 (UNITED TECHNOLOGIES CORP [US]) 8 August 2013 (2013-08-08)<br>* paragraph [0010]; figures 8A, 8B *<br>----- | 1-14 | |
| X | US 2015/192071 A1 (KUPRATIS DANIEL BERNARD [US] ET AL) 9 July 2015 (2015-07-09)<br>* paragraph [0006]; figures 8A,8B *<br>----- | 1-14 | |

-/--

The present search report has been drawn up for all claims

| Place of search | Date of completion of the search | Examiner |
|---|---|---|
| The Hague | 2 March 2017 | Angelucci, Stefano |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

                                     
& : member of the same patent family, corresponding document

EPO FORM 1503 03.82 (P04C01)

Europäisches
Patentamt

European
Patent Office

Office européen
des brevets

# EUROPEAN SEARCH REPORT

Application Number

EP 16 19 6969

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2013/192258 A1 (KUPRATIS DANIEL BERNARD [US] ET AL) 1 August 2013 (2013-08-01) * paragraphs [0010], [0011]; figures 8A, 8B * | 1-14 | |
| X | EP 2 851 520 A1 (UNITED TECHNOLOGIES CORP [US]) 25 March 2015 (2015-03-25)<br><br>* paragraph [0060]; figures 1A, 1C * | 1-3,5, 7-11,13, 14 | |
| X | US 2015/096303 A1 (SCHWARZ FREDERICK M [US] ET AL) 9 April 2015 (2015-04-09)<br><br>* claim 1 *<br>* figure 1 * | 1-3,5, 7-11,13, 14 | |
| X | US 2013/192191 A1 (SCHWARZ FREDERICK M [US] ET AL) 1 August 2013 (2013-08-01)<br><br>* paragraph [0005]; figure 1 * | 1-3,5, 7-11,13, 14 | |
| X | US 2014/130479 A1 (SCHWARZ FREDERICK M [US] ET AL) 15 May 2014 (2014-05-15)<br><br>* paragraph [0011]; figures 1,3 * | 1-3,5, 7-11,13, 14 | TECHNICAL FIELDS SEARCHED (IPC) |
| X | US 2013/195648 A1 (SCHWARZ FREDERICK M [US] ET AL) 1 August 2013 (2013-08-01)<br><br>* paragraph [0014]; figures 1,3 * | 1-3,5, 7-11,13, 14 | |
| X | US 2015/089958 A1 (SUCIU GABRIEL L [US] ET AL) 2 April 2015 (2015-04-02)<br><br>* paragraph [0022]; figure 1 * | 1-3,5, 7-11,13, 14 | |

-/--

The present search report has been drawn up for all claims

| Place of search | Date of completion of the search | Examiner |
|---|---|---|
| The Hague | 2 March 2017 | Angelucci, Stefano |

EPO FORM 1503 03.82 (P04C01)

Europäisches
Patentamt

European
Patent Office

Office européen
des brevets

## EUROPEAN SEARCH REPORT

Application Number

EP 16 19 6969

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2013/192196 A1 (SUCIU GABRIEL L [US] ET AL) 1 August 2013 (2013-08-01)<br><br>* paragraphs [0010], [0011], [0031]; figure 1 *<br>----- | 1-3,5, 7-11,13, 14 | |

TECHNICAL FIELDS
SEARCHED      (IPC)

The present search report has been drawn up for all claims

| Place of search | Date of completion of the search | Examiner |
|---|---|---|
| The Hague | 2 March 2017 | Angelucci, Stefano |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

              .........................................................................
& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 16 19 6969

This annex lists the patent family members relating to the patent documents cited in the above-mentioned European search report.
The members are as contained in the European Patent Office EDP file on
The European Patent Office is in no way liable for these particulars which are merely given for the purpose of information.

02-03-2017

| Patent document cited in search report | | Publication date | Patent family member(s) | | Publication date |
|---|---|---|---|---|---|
| EP 2811120 | A1 | 10-12-2014 | BR 102014007285 | A2 | 26-05-2015 |
| | | | CA 2845618 | A1 | 22-05-2014 |
| | | | CN 104213985 | A | 17-12-2014 |
| | | | EP 2811120 | A1 | 10-12-2014 |
| | | | EP 2949881 | A1 | 02-12-2015 |
| | | | EP 2949882 | A1 | 02-12-2015 |
| | | | JP 5732562 | B2 | 10-06-2015 |
| | | | JP 2014234822 | A | 15-12-2014 |
| | | | RU 2014110925 | A | 27-09-2015 |
| | | | SG 10201401514U | A | 29-01-2015 |
| US 2013192200 | A1 | 01-08-2013 | CA 2854082 | A1 | 14-11-2013 |
| | | | CA 2933432 | A1 | 01-01-2017 |
| | | | EP 2809939 | A2 | 10-12-2014 |
| | | | JP 2017015090 | A | 19-01-2017 |
| | | | RU 2014134423 | A | 27-03-2016 |
| | | | SG 11201402667Q | A | 26-09-2014 |
| | | | US 2013192200 | A1 | 01-08-2013 |
| | | | US 2015330302 | A1 | 19-11-2015 |
| | | | WO 2013169316 | A2 | 14-11-2013 |
| US 2014157757 | A1 | 12-06-2014 | NONE | | |
| US 2013192266 | A1 | 01-08-2013 | CA 2857357 | A1 | 08-08-2013 |
| | | | CA 2951916 | A1 | 08-08-2013 |
| | | | EP 2809931 | A1 | 10-12-2014 |
| | | | EP 3115292 | A1 | 11-01-2017 |
| | | | RU 2014134792 | A | 20-03-2016 |
| | | | SG 11201403015W | A | 26-09-2014 |
| | | | US 2013192266 | A1 | 01-08-2013 |
| | | | WO 2013116262 | A1 | 08-08-2013 |
| US 2013192201 | A1 | 01-08-2013 | CA 2856912 | A1 | 24-10-2013 |
| | | | EP 2809940 | A1 | 10-12-2014 |
| | | | RU 2014134786 | A | 27-03-2016 |
| | | | SG 11201403011R | A | 28-08-2014 |
| | | | US 2013192201 | A1 | 01-08-2013 |
| | | | WO 2013158187 | A1 | 24-10-2013 |
| US 2013192265 | A1 | 01-08-2013 | CA 2853839 | A1 | 08-08-2013 |
| | | | EP 2809903 | A1 | 10-12-2014 |
| | | | RU 2014134785 | A | 27-03-2016 |
| | | | SG 11201403614V | A | 30-10-2014 |
| | | | US 2013192265 | A1 | 01-08-2013 |
| | | | WO 2013116023 | A1 | 08-08-2013 |

EPO FORM P0459

For more details about this annex : see Official Journal of the European Patent Office, No. 12/82

## ANNEX TO THE EUROPEAN SEARCH REPORT
## ON EUROPEAN PATENT APPLICATION NO.

EP 16 19 6969

This annex lists the patent family members relating to the patent documents cited in the above-mentioned European search report.
The members are as contained in the European Patent Office EDP file on
The European Patent Office is in no way liable for these particulars which are merely given for the purpose of information.

02-03-2017

| Patent document cited in search report | | Publication date | Patent family member(s) | | Publication date |
|---|---|---|---|---|---|
| WO 2013116257 | A1 | 08-08-2013 | CA | 2857360 A1 | 08-08-2013 |
| | | | EP | 2809938 A1 | 10-12-2014 |
| | | | RU | 2014134425 A | 27-03-2016 |
| | | | SG | 11201402824R A | 26-09-2014 |
| | | | US | 2014196472 A1 | 17-07-2014 |
| | | | WO | 2013116257 A1 | 08-08-2013 |
| US 2015192071 | A1 | 09-07-2015 | NONE | | |
| US 2013192258 | A1 | 01-08-2013 | CA | 2857351 A1 | 24-10-2013 |
| | | | EP | 2809922 A1 | 10-12-2014 |
| | | | RU | 2014134426 A | 27-03-2016 |
| | | | SG | 11201402823T A | 26-09-2014 |
| | | | US | 2013192258 A1 | 01-08-2013 |
| | | | WO | 2013158191 A1 | 24-10-2013 |
| EP 2851520 | A1 | 25-03-2015 | BR | 102014020190 A2 | 22-09-2015 |
| | | | CA | 2854728 A1 | 24-03-2015 |
| | | | EP | 2851520 A1 | 25-03-2015 |
| | | | JP | 2015063990 A | 09-04-2015 |
| | | | RU | 2014138587 A | 10-04-2016 |
| | | | SG | 10201403358X A | 29-04-2015 |
| US 2015096303 | A1 | 09-04-2015 | NONE | | |
| US 2013192191 | A1 | 01-08-2013 | US | 2013192191 A1 | 01-08-2013 |
| | | | US | 2013195621 A1 | 01-08-2013 |
| US 2014130479 | A1 | 15-05-2014 | CA | 2889618 A1 | 22-05-2014 |
| | | | EP | 2920445 A1 | 23-09-2015 |
| | | | JP | 2015536409 A | 21-12-2015 |
| | | | US | 2014130479 A1 | 15-05-2014 |
| | | | WO | 2014078157 A1 | 22-05-2014 |
| US 2013195648 | A1 | 01-08-2013 | CA | 2854077 A1 | 08-08-2013 |
| | | | EP | 2809953 A1 | 10-12-2014 |
| | | | RU | 2014134421 A | 20-03-2016 |
| | | | SG | 11201403615Q A | 30-10-2014 |
| | | | US | 2013195648 A1 | 01-08-2013 |
| | | | WO | 2013116005 A1 | 08-08-2013 |
| US 2015089958 | A1 | 02-04-2015 | NONE | | |
| US 2013192196 | A1 | 01-08-2013 | CA | 2856723 A1 | 17-10-2013 |
| | | | EP | 2809934 A2 | 10-12-2014 |
| | | | RU | 2014134790 A | 20-03-2016 |

EPO FORM P0459

For more details about this annex : see Official Journal of the European Patent Office, No. 12/82

## ANNEX TO THE EUROPEAN SEARCH REPORT
## ON EUROPEAN PATENT APPLICATION NO.

EP 16 19 6969

This annex lists the patent family members relating to the patent documents cited in the above-mentioned European search report.
The members are as contained in the European Patent Office EDP file on
The European Patent Office is in no way liable for these particulars which are merely given for the purpose of information.

02-03-2017

| Patent document cited in search report | Publication date | Patent family member(s) | Publication date |
|---|---|---|---|
| | | SG 11201403118S A | 26-09-2014 |
| | | US 2013192196 A1 | 01-08-2013 |
| | | WO 2013154649 A2 | 17-10-2013 |